# EUROPEAN PATENT SPECIFICATION

(11) **EP 0 428 054 B1**
(45) Date of publication and mention of the grant of the patent: **26.01.1994**
(21) Application number: 90121331.4
(22) Date of filing: 07.11.1990
(51) Int. Cl.: B01J 3/02, C08F 10/00

(54) **Device for feeding a mud-like catalytic mixture into a polymerization reactor**
Apparat zum Beschicken eines Polymerisationsreaktors mit einem schlammartigen Katalysatorgemisch
Dispositif pour introduire un mélange de catalyseurs en forme de boue dans un réacteur de polymérisation

(30) Priority: 14.11.1989 FI 895423
(43) Date of publication of application: 22.05.1991
(73) Proprietor: NESTE OY, FIN-02150 Espoo (FI)
(72) Inventor: Ahvenainen, Antero, F-06150 Porvoo (FI); Andtsjö, Henrik, F-06150 Porvoo (FI); Sarantila, Kari, F-06400 Porvoo (FI); Takakarhu, Jouni, F-00760 Helsinki (FI)
(74) Representative: Bühling, Gerhard, Dipl.-Chem.

(56) References cited:
- DE-C- 974 175
- FR-A- 1 372 312
- US-A- 3 227 312

## Description

The invention relates to a device for feeding the mud-like catalytic mixture from the container by batches into the polymerization reactor as a continuous process, which device comprises a four-way valve, which is provided with rotatable plug, wherein cross-wise penetrating borings are formed in such a way that the first boring and the second boring of the plug are not connected with each other, and in the frame of which device cross-wise penetrating holes are formed, the first of which holes is formed of a first feeding channel connected with the plug of the feeding device of the container, which feeding channel on the opposite side of the plug continues as a first discharge channel out of the frame, and the second of which holes is formed of a second feeding channel connected with a medium feeding-line, which feeding channel on the opposite side of the plug continues as a second discharge channel, which is connected to a reactor line entering the polymerization reactor.

In several chemical reactions, as e.g. in the polymerization of certain hydrocarbon monomers, are used catalysts for advancing the chemical reaction. These reactions are very sensitive relative to the amount of catalyst used in such a way that the production capacity of the reaction can be adjusted by adjusting the amount of the catalyst fed into the reactor. In such processes, the catalytic mixture is usually fed into a mixture container or a mixing container, in which the mixture is admixed in such a way that on the bottom of the container is formed the desired constant concentration, which is fed from the container to the polymerization reactor by means of a feeding or batching device. Since the processes of this type are continuous and uninterrupted, it must be possible to continuously batch the catalyst by the amount exactly desired into the polymerization reactor. This sets very great prerequisites and requirements for the operation and the operational reliability.

Such systems have previously been described e.g. in the US patents 3 167 398, 3 227 312, 4 155 488 and 4 690 804 as well as in the EP publication 25 137. However, several detrimental features are related to the solutions of these publications, and the present invention is intended to avoid these detrimental features. For example, in the solutions according to the US patents 3 167 398 and 4 563 665, a ball valve is used as a batching device for a catalytic mixture. The general problems related to ball valves are a possible leakage of the valve and the stucking of the valve ball. The construction of these valves is complex, due to which the fabrication of these valves is cumbersome. The same valve can usually be used only for feeding and batching a catalytic mixture of a certain type, and if for example the activity of the catalyst needed for the process has to be modified, the batching valve must be entirely changed. The problems of the other above-mentioned US patents are related to the removal of the medium needed for feeding the catalytic mixture from the batching device as well as the filling capacity of the batching device. It is, on the basis of the solutions according to these publications, thus very difficult to reach an accurate adjustment of the catalytic mixture. It is possible to reach a good batching adjustment of the catalytic mixture in accordance with the EP publication 25 137, but a disadvantage of this solution is yet the fact that during operation, the device requires a continuous flushing for reaching an accurate batching.

Another type of a feeding and batching device is disclosed in the DE-C 974 175, which shows a "pocket-feeder" in which a material to be fed into a pressurized reactor is intermittendly put into pockets of a batching device by charges. For feeding the material into the reactor, pressurized steam enters by a sharp injections flow into the pocket which expands strongly outwards. In this system, flushing is not effective since a great amount of the material to be fed will remain in the pocket.

Further, this known feeding/batching device has a drill hole leading to a discharge channel which is used as a blowoff outlet to let off the steam. If the medium is steam, it is easy to remove this medium because only a partial vacuum is needed for its removal. However, the problems associated with a feeding /batching device for a mud-like mixture are different and more severe than the problems associated with a feeding/batching device working with a steam medium.

The object of the present invention is to provide a method and a device, by means of which the disadvantages related to the publications of the described prior art are avoided.

The device in accordance with the invention is in part mainly characterized in that on the frame 11 of the feeding device is formed a third discharge channel between the borings cross-wise penetrating through the frame, via which discharge channel a connection opens from the plug of the feeding device out of the frame of feeding device.

Several important advantages can be obtained by means of the invention, the advantages being e.g. as follows. By means of the method and the device according to the invention, a very accurate batching of the catalytic mixture can be achieved. This mainly results from the fact that the filling capacity of the valve used as a batching device is excellent, since during the process the medium is continuously removed from the batching device e.g. in such a way that the medium is allowed to evaporate out of the batching device via an additional channel formed in the device. In the device according to the invention, there are very few wearing parts, owing to which the leaking of the device is eliminated and the device is extremely reliable in operation. The batching device according to the invention can be adapted by means of very simple measures e.g. for feeding and batching catalysts of a very different activity. The remaining advantages and special features of the invention are shown in a detailed description presented below.

The invention is next illustrated in more detail with reference to the figures of the accompanying drawing.

Fig. 1 is a schematic general view showing a mixing and feeding system according to the invention.

Fig. 2 is a more detailed and partially sectional view of a feeding device used in the method according to the invention.

Fig. 3 is a schematic sectional view along the line III-III of Fig. 2.

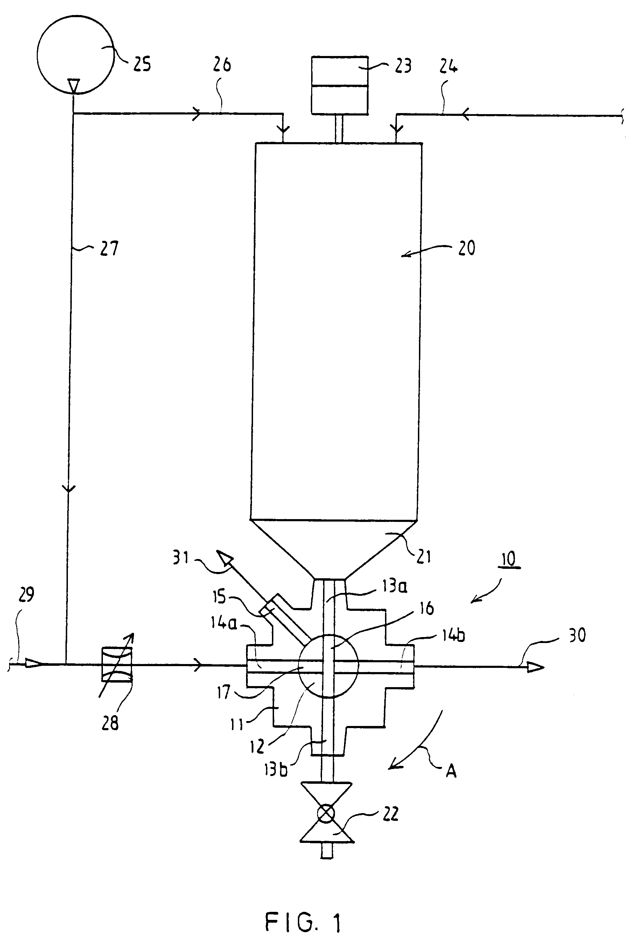

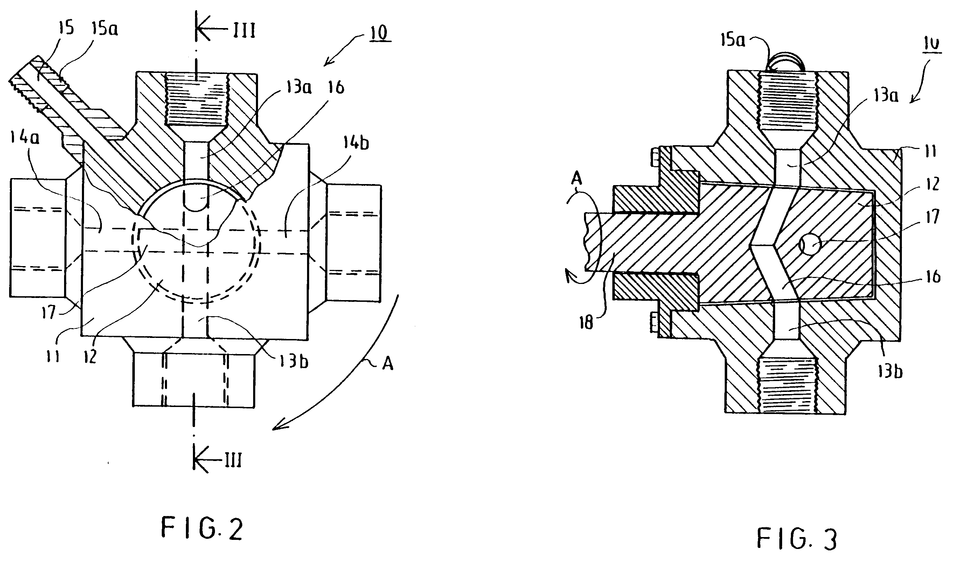

According to Fig. 1, the catalytic mixture is fed along a feeding line 24 into a mixing container 20 provided with a mixing device 23. By means of said mixing device 23, the catalytic mixture is mixed in a mixing container 20 in such a way that in a lower part 21 of the mixing container is formed the desired constant concentration of the catalytic mixture, which is thus freely allowed to settle on the bottom of the mixing container 20. The mixing container 20 is pressurized, and the pressure in the mixing container 20 is maintained as desired by means of a high-pressure pump 25, which feeds the desired pressure to the container along a first pressure line 26. The pressure of the mixing container 20 is generally higher than the pressure of the polymerization reactor. The lower part of the mixing container 20 is connected with an inventive feeding device 10, with which the catalytic mixture is fed into the polymerization reactor. Said feeding device 10 is also shown in more detail in Fig. 2 and 3 of the drawing.

The catalytic mixture used in the system is mud-like comprising small particles. The catalytic mixture can be e.g. chrome-based in such a way that the chrome is impregnated with the surface of the particles. Accordingly, said catalytic mixture is run from the mixing container 20 to the feeding device 10, on one hand by means of gravitational force and on the other hand by means of overpressure supplied by the high-pressure pump 25. In a way, the feeding device 10 comprises a four-way valve formed of a frame 11 of the feeding device and of a rotatable plug 12 fitted in the boring formed on the frame 11. In the frame 11 of the feeding device are formed penetrating and cross-wise borings in such a way that the first boring comprises a first feeding channel 13a combining the mixing container 20 with the plug 12 of the feeding device, as well as a first discharge channel 13b coaxial with the first feeding channel, to which discharge channel 13b is connected a sampling valve 22. The other boring in part comprises a second feeding channel 14a, to which is connected a medium feeding-line 29, as well as a second discharge channel 14b coaxially continuing with the second feeding channel 14a on the opposite side of the plug 12 of the feeding device, which discharge channel 14b is connected to a reactor line 30 leading to the polymerization reactor. On the plug 12 of the feeding device are formed cross-wise penetrating borings 16, 17, which are arranged on the plug 12 in such a way that the first boring 16 and the second boring 17 transversely extend through the plug 12 relative to the center axis of the plug 12, but are nevertheless connected with each other. When the plug 12 is thus rotated on the frame 11 of the feeding device in the rotational direction A, the borings 16, 17 formed on the plug 12 alternately, on one hand, connect with each other the first feeding channel 13a and the first discharge channel 13b and, on the other hand, the second feeding channel 14a and the second discharge channel 14b. On the plug 12 is formed or the plug 12 is fastened to a shaft 18, which is connected to a suitable actuator, by means of which the plug is continuously rotated during the process. Any conventional actuator can be used as an actuator.

When the process is in operation, the plug 12 is thus continuously rotated. In the figures of the drawing is shown a situation, wherein the plug 12 has rotated into a position, in which the first boring 16 in the plug 12 has turned to combine the first feeding channel 13a with the first discharge channel 13b. Similarly, the second boring 17 of the plug 12 is then in a position, in which it combines the feeding channel 14a with the second discharge channel 14b. In the position shown in the figures, the catalytic mixture thus flows from the mixing container 20 by means of overpressure achieved by the gravitational force and the high-pressure pump 25 from the first feeding channel 13a to the first boring 16 of the plug in such a way that said first boring 16 is entirely filled with the catalytic mixture. Similarly, in the situation shown in the figures, the medium is fed from the feeding line 29 to the second feeding channel 14a of the feeding device, from which feeding channel 14a it flows through the second boring 17 of the plug 12 to the second discharge channel 14b and further therefrom via a reactor line to the polymerization reactor. The mediums typically used in such processes include e.g. propane, butane, hexane, pentane and the like. From the high-pressure pump 25 a second pressure line 27 is connected to the medium feeding-line 29 in such a way that also the medium enters the feeding device 10 under pressure. However, the medium feeding-line 29 is connected to a throttle, with which the pressure is reduced in such a way that the pressure entering the feeding device 10 is smaller than the pressure of the second pressure line 27. When in the situation shown in the figures the plug 12 is rotated in the rotational direction A 90°, a situation is achieved, in which the first boring 16 of the plug 12 connects the second feeding channel 14a of the feeding device to the second discharge channel 14b, and correspondingly the second boring 17 connects the first feeding channel 13a to the first discharge channel 13b. The medium fed from the medium feeding-line 29 to the second feeding channel 14a runs thereby the catalytic mixture in the first boring 16 to the polymerization reactor. Similarly, a new batch then enters from the mixing container 20 the second boring 17 in the plug 12. By means of the sampling valve 22 connected with the first discharge channel 13b, samples can be taken from the catalytic mixture as desired.

In previous solutions, when batching a catalytic mixture into a polymerisation reactor, a considerable problem was formed by the fact that the borings 16, 17 on the plug 12 determining the quantity of the catalytic batch entering the polymerization reactor could not freely and reliably be filled, since when the boring 16 or 17 turned to the first feeding channel 13a, said channel contained in each case a certain quantity of the medium, which, at least partly, prevented the transfer of the catalytic mixture into said channel. In the solution according to the invention, this problem has been eliminated and realized in such a way that on the frame 11 of the feeding device is formed a third discharge channel 15 comprising a lateral flushing block. In the realization example according to the figures, said third discharge channel 15 is formed between the first feeding channel 13a and the second feeding channel 14a in such a way that a connection opens form the plug 12 of the feeding device via said third discharge channel 14 out of the feeding device 10.

Owing to said third discharge channel 15 is achieved an essential improvement in the operation of the feeding device 10. When the plug 12 of the feeding device is turned from the position shown in the figures in the direction of the arrow A, the first boring 16 of the plug 12 is filled with a pressurized medium. When the plug 12 turns into a position, wherein the second boring 17 enters the third discharge channel 15, the medium can freely leave said second boring 17 via the third discharge channel 15. Since the typical mediums used easily evaporate, said medium immediately evaporates in the second boring 17, as said boring enters the third discharge channel 15, since an extremely rapid pressure drop occurs in the second boring 17. When the second boring 17 has thus turned past the third discharge channel 15, it is completely empty of the medium, whereby, when said boring 17 enters the first feeding channel 13a, the catalytic mixture can completely freely settle in said boring 17 and fill it entirely. The batching and the adjustment are thus essentially better in comparison with the previous solutions. A discharge block 15a arranged in connection with the third discharge channel 15 is suitably connected to the medium discharge-line 31, along which the gases are led to the incineration system of the plant.

In case the mediums used in the process are such liquid-like mediums, which do not easily evaporate, the third discharge channel 15 can also be arranged according to the figures on the opposite side of the plug 12, i.e. between the first discharge channel 13b and the second discharge channel 14b. In such a case, a liquid medium can by the effect of the gravitational force flow away from the feeding device 10, whereby the boring 16 or 17 turning toward the first feeding channel 13a can in each case always freely to be filled. In such solutions, in particularly, wherein the removal of the medium is arranged via the third discharge channel 15 by evaporation, the plug 12 of the feeding device does not have to be stopped, when one of the borings 16 or If of the plug is at said third discharge channel 15, but the medium has enough time to sufficiently evaporate and leave when the plug 12 rotates.

In the arrangement according to the invention, a satisfactory filling of the borings 16, 17 of the plug 12 can be ensured, whereby the quantity of the batching of the catalytic mixture into the polymerization reactor can simply be adjusted by controlling the rotational frequency of the plug 12 of the feeding device 10. In addition, the construction of the feeding device 10 according to the invention is very simple in such a way that the plug 12 of the feeding device 10 can easily be changed. Because of this, the feeding device 10 can be provided with plugs 12 in such a way that the size of the borings located therein can be varied. The quantity of batching can thus also be adjusted in such a way that plugs 12 having borings 16, 17 of a different size are used in the feeding device 10.

The invention has above been described by way of example only with reference to the figures of the accompanying drawing. However, the invention is not only limited to concern the example shown in the figures, but various modifications are possible within the inventive idea defined in the patent claims.

## Claims

1. A device for feeding a mud-like catalytic mixture by batches into the polymerization reactor from a container (20) as a continuous process, which device (10) comprises a four-way valve provided with a rotatable plug (12), wherein are formed cross-wise penetrating borings in such a way that a first boring (16) and a second boring (17) are not connected with each other, and in the frame (11) of which device (10) are formed cross-wise penetrating holes, the first hole (13a, 13b) formed of a first feeding channel (13a) connecting the outlet of the container (20) to the feeding device (10), which feeding channel (13a) on the opposite side of the plug (12) continues as a first discharge channel (13b) out of the frame, and the second hole being formed of a second feeding channel (14a) connected to a medium feeding-line (29), which feeding channel (14a) on the opposite side of the plug (12) continues as a second discharge channel (14b), which is connected to a reactor line (30) entering the polymerization reactor, characterized in that on the frame (11) of the feeding device between borings (13a, 13b; 14a, 14b) cross-wise penetrating the frame (11) a third discharge channel (15) is formed, via which a connection opens from the plug of the feeding device out of the frame (11) of the feeding device.

2. A device according to Claim 1, characterized in that the third discharge channel (15) is formed on the frame (11) between the first and second feeding channel (13a, 14a).

3. A device according to Claim 1, characterized in that the third discharge channel (15) is formed on the frame (11) between the first and second discharge channel (13b, 14b).

## Patentansprüche

1. Vorrichtung zum Beschicken eines Polymerisationsreaktors mit einem schlammartigen Katalysatorgemisch von einem Behälter (20) durch Chargen als ein kontinuierlicher Prozeß, wobei die Vorrichtung (10) ein Vier-Wegeventil aufweist, das mit einem drehbaren Küken (12) versehen ist, in dem kreuzweise, durchdringende Bohrungen in einer solchen Weise ausgebildet sind, daß eine erste Bohrung (16) und eine zweite Bohrung (17) nicht miteinander verbunden sind, und wobei im Rahmen (11) der Vorrichtung (10) kreuzweise, durchdringende Ausnehmungen ausgebildet sind, wobei die erste Ausnehmung (13a, 13b) aus einem ersten Beschickungskanal (13a) gebildet wird, der den Auslaß des Behälters (20) mit der Beschickungsvorrichtung (10) verbindet, wobei der Beschickungskanal (13a) auf der gegenüberliegenden Seite des Kükens (12) als ein erster Auslaßkanal (13b) aus dem Rahmen hinaus weiterführt, und wobei die zweite Ausnehmung aus einem zweiten Beschickungskanal (14a) gebildet wird, der mit einer Träger-Beschickungs-Leitung (29) verbunden ist, wobei der Beschickungskanal (14a) auf der gegenüberliegenden Seite des Kükens (12) als ein zweiter Auslaßkanal (14b) weiterführt, der mit einer Reaktorleitung (30), die in den Polymerisationsreaktor tritt, verbunden ist,
dadurch gekennzeichnet, daß
am Rahmen (11) der Beschickungsvorrichtung ein dritter Auslaßkanal (15) zwischen den den Rahmen (11) kreuzweise durchdringenden Bohrungen (13a, 13b; 14a, 14b) ausgebildet ist, über den eine Verbindung vom Küken der Beschickungsvorrichtung aus dem Rahmen (11) der Beschickungsvorrichtung hinaus geöffnet wird.

2. Vorrichtung gemäß Anspruch 1, dadurch gekennzeichnet, daß der dritte Auslaßkanal (15) am Rahmen (11) zwischen dem ersten und dem zweiten Beschickungskanal (13a, 14a) ausgebildet ist.

3. Vorrichtung gemäß Anspruch 1, dadurch gekennzeichnet, daß der dritte Auslaßkanal (15) am Rahmen (11) zwischen dem ersten und dem zweiten Auslaßkanal (13b, 14b) ausgebildet ist.

## Revendications

1. Dispositif pour introduire par lots un mélange catalytique sous forme de boue dans le réacteur de polymérisation à partir d'un réservoir (20) sous forme de procédé continu, lequel dispositif (10) comprend une vanne à quatre voies munie d'un bouchon rotatif (12), dans lequel sont formés des alésages de pénétration transversaux de telle sorte qu'un premier alésage (16) et un deuxième alésage (17) ne sont pas raccordés entre eux, et dans le châssis (11) duquel dispositif (10) sont formés des trous de pénétration transversaux, le premier trou (13a, 13b) étant constitué par un premier canal d'alimentation (13a) reliant la sortie du réservoir (20) au dispositif d'alimentation (10), lequel canal d'alimentation (13a) sur le côté opposé du bouchon (12) se poursuit sous forme de premier canal de décharge (13b) en dehors du châssis, et le deuxième trou étant constitué par un deuxième canal d'alimentation (14a) raccordé à une conduite d'alimentation de fluide (29), lequel canal d'alimentation (14a) sur le côté opposé du bouchon (12) se poursuit sous forme de deuxième canal d'évacuation (14b), lequel est raccordé à une conduite de réacteur (30) pénétrant dans le réacteur de polymérisation, caractérisé en ce que sur le châssis (11) du dispositif d'alimentation entre les alésages (13a, 13b ; 14a, 14b) pénétrant transversalement dans le châssis (11) est formé un troisième canal d'évacuation (15) par l'intermédiaire duquel s'ouvre un raccord à partir du bouchon du dispositif d'alimentation hors du châssis (11) du dispositif d'alimentation.

2. Dispositif selon la revendication 1, caractérisé en ce que le troisième canal d'évacuation (15) est formé sur le châssis (11) entre le premier et le deuxième canal d'alimentation (13a, 14a).

3. Dispositif selon la revendication 1, caractérisé en ce que le troisième canal d'évacuation (15) est formé sur le châssis (11) entre le premier et le second canal d'évacuation (13b, 14b).
